# FASCICULE DE BREVET EUROPEEN

(11) **EP 3 081 609 B1**
(45) Date de publication et mention de la délivrance du brevet: **24.06.2020**
(21) Numéro de dépôt: 16164571.8
(22) Date de dépôt: 08.04.2016
(51) Int. Cl.: C09D 195/00, C09J 195/00, C08K 5/25, C08L 23/02, C08L 23/08, E04D 5/14

(54) **LIANT DE COLLAGE BITUMINEUX ET SON UTILISATION**
BITUMINÖSES BINDEMITTEL ZUM KLEBEN, UND SEINE VERWENDUNG
BITUMINOUS ADHESIVE BINDER AND USE THEREOF

(30) Priorité: 14.04.2015 FR 1553221
(43) Date de publication de la demande: 19.10.2016
(73) Titulaire: TOTAL MARKETING SERVICES, 92800 Puteaux (FR)
(72) Inventeur: MOUAZEN, Mouhamad, 69008 LYON (FR); VINCENT, Regis, 69520 GRIGNY (FR)
(74) Mandataire: Corizzi, Valérie

(56) Documents cités:
- EP-A1- 0 837 910
- EP-A1- 1 917 309

## Description

### DOMAINE TECHNIQUE

La présente invention concerne un liant de collage bitumineux et son utilisation pour le collage de revêtements d'ouvrage de travaux publics, de génie civil ou de bâtiments, par exemple, pour le collage de membrane d'étanchéité.

### ARRIERE-PLAN TECHNOLOGIQUE

Les bitumes oxydés sont connus pour leurs propriétés d'adhésivité, notamment pour des applications d'ouvrages de travaux publics ou de bâtiments. Ils sont classiquement utilisés comme liants de collage de membranes d'étanchéité ou de matériaux isolants sur les toitures. Les bitumes oxydés peuvent être appliqués ou enduits à froid ou à chaud. L'application à froid se révèle néanmoins peu efficace sur certains supports. Pour l'application ou l'enduction à chaud, les températures d'application préconisées de ces bitumes oxydés sont généralement supérieures à 200°C, voire même supérieures à 250°C pour obtenir une fluidité suffisante et permettre leur application et le collage de structures sur les sols ou murs à recouvrir.

L'utilisation à ces températures induit une forte consommation d'énergie et nécessite un temps de chauffage supplémentaire, augmentant la durée du procédé de revêtement mettant en œuvre l'étape de collage.

Des compositions ont été proposées pour remplacer les bitumes oxydés comme liant de collage : en particulier, des compositions non bitumineuses tels que par exemple des liants hydrauliques à base de ciment et superplastifiant (FR2713686) ou des compositions bitumineuses comprenant des élastomères pour une application à chaud ou à froid. Le document FR2691196 propose de préparer une couverture d'isolation en associant une chape souple spécifique avec une colle rigide de type epoxy ou polyurethane mélangé ou non à du bitume. Le document EP1350900 décrit un liant de collage formé d'un mélange de bitume/élastomère thermoplastique de type SBS, SIS ou EVA pour coller un isolant thermique à froid c'est à dire par enduction du mélange à une température comprise entre 5 et 40°C. On trouve également dans le commerce un produit commercialisé par SOPREMA sous le nom de EAC NEO correspondant à un bitume modifié à base de SEBS (polystyrène-b-poly(éthylène-butylène)-b-polystyrène) utilisé pour le collage à chaud d'isolants thermiques ou de feuilles d'étanchéité en toiture.

Le document EP 1 917 309 décrit un procédé de préparation d'une composition de bitume, ce procédé comprenant l'introduction d'un additif de soufflage chimique qui permet de diminuer la susceptibilité thermique de la base bitume, avec une température de ramollissement bille anneau supérieure, et une pénétrabilité à l'aiguille inférieure, à celles de la base bitume seule. Toutefois, ce document n'enseigne ni ne suggère d'utiliser la composition de bitume comprenant cet additif comme liant de collage de revêtements d'ouvrages de travaux publics, de génie civil ou de bâtiments.

Ainsi, le premier but de la présente invention est de fournir un liant de collage efficace, avec une résistance à l'arrachement et au décollage améliorée, utilisable à des températures inférieures à 200°C.

Un autre objet de l'invention est de proposer un liant de collage facile à mettre en œuvre.

La société demanderesse a également établi de façon surprenante, que l'incorporation dans un liant de collage bitumineux d'un additif, éventuellement associé à un adjuvant polymère oléfinique permet d'obtenir un liant de collage bitumineux aux propriétés améliorées, notamment pour le collage de membranes d'étanchéité.

### RESUME

La présente invention a ainsi pour objet un liant de collage bitumineux comprenant :
- un bitume
- au moins un additif de formule générale (I) :

   Ar1-R-Ar2 (I)

   où Ar1 et Ar2 représentent indépendamment l'un de l'autre un noyau benzène ou un système de noyaux aromatiques condensés de 6 à 20 atomes de carbones, substitués par au moins un groupe hydroxyle, et R représente un radical divalent éventuellement substitué, dont la chaîne principale comprend de 6 à 20 atomes de carbone et au moins un groupe amide et/ou ester, et
- au moins un adjuvant polymère oléfinique fonctionnalisé par au moins des groupements fonctionnels glycidyle.

Dans un mode de réalisation préféré, l'additif (I) est caractérisé en ce que dans la formule générale Ar1-R-Ar2 (I), le radical R est en position *para* par rapport à un groupe hydroxyle de Ar1 et/ou de Ar2.

Dans un autre mode de réalisation spécifique, éventuellement combiné au mode précédent, Ar1 et/ou Ar2 sont substitués par au moins un groupe alkyle comprenant de 1 à 10 atomes de carbone, de préférence en une ou des positions *ortho* par rapport au(x) groupe(s) hydroxyle(s) de Ar1 et/ou Ar2.

Dans un mode de réalisation spécifique, Ar1 et Ar2 sont des groupes 3,5-dialkyl-4-hydroxyphényle, avantageusement des groupes 3,5-di-*tert*-butyl-4-hydroxyphényle.

De préférence, l'additif (I) est le 2',3-bis[[3-[3,5-di-tert-butyl-4-hydroxyphenyl]propionyl]]propionohydrazide.

Le liant de collage selon l'invention comprend de préférence de 0,3% à 1,5% en poids d'additif (I), préférentiellement de 0,4% à 1%, et encore plus préférentiellement de 0,8% à 1%, par rapport au poids total du liant.

Dans un autre mode de réalisation spécifique, l'adjuvant polymère oléfinique est choisi dans le groupe consistant en
(a) les copolymères statistiques ou séquencés d'éthylène et d'un monomère choisi parmi l'acrylate de glycidyle et le méthacrylate de glycidyle, comprenant de 50% à 99,7% en masse,
(b) les terpolymères statistiques ou séquencés, d'éthylène, d'un monomère A choisi parmi l'acétate de vinyle et les acrylates ou méthacrylates d'alkyle en C₁ à C₆, et d'un monomère B choisi parmi l'acrylate de glycidyle et le méthacrylate de glycidyle, comprenant de 0,5% à 40% en masse de motifs issus du monomère A et, de 0,5% à 15% en masse de motifs issus du monomère B, le reste étant formé de motifs issus de l'éthylène ; et
(c) les copolymères résultant du greffage d'un monomère B choisi parmi l'acrylate de glycidyle et le méthacrylate de glycidyle, sur un substrat consistant en un polymère choisi parmi les polyéthylènes, notamment les polyéthylènes basse densité, les polypropylènes, les copolymères statistiques ou séquencés d'éthylène et d'acétate de vinyle et les copolymère statistiques ou séquencés d'éthylène et d'acrylate ou méthacrylate d'alkyle en C₁ à C₆, comprenant de 40% à 99,7% en masse d'éthylène, lesdits copolymères greffés comprenant de 0,5% à 15% en masse de motifs greffés issus du monomère B.

Avantageusement, l'adjuvant polymère oléfinique est choisi parmi les terpolymères statistiques ou séquencés d'éthylène, d'un monomère A choisi parmi les acrylates ou méthacrylates d'alkyle en C1 à C6 et d'un monomère B choisi parmi l'acrylate de glycidyle et le méthacrylate de glycidyle, comprenant de 0,5% à 40% en masse de motifs issus du monomère A et, de 0,5% à 15% en masse de motifs issus du monomère B, le reste étant formé de motifs issus de l'éthylène.

Le liant de collage bitumineux selon l'invention comprend de préférence de 0,5% à 5 % en poids d'adjuvant polymère oléfinique, préférentiellement de 0,8% à 2,2%, et encore plus préférentiellement, de 1% à 2%, par rapport au poids total du liant.

Le liant de collage bitumineux est caractérisé en ce qu'il présente une température de ramollissement Température Bille-Anneau déterminée selon la norme EN1427 supérieure ou égale à 80°C, de préférence comprise entre 90°C et 120°C. En outre, il peut avantageusement présenter une contrainte maximale τₘₐₓ avant et après vieillissement de 3 mois à 70°C, comprise entre 1 et 3 MPa, telle que déterminée par un essai de pelage décrit dans la partie expérimentale.

L'invention concerne également un procédé de préparation d'un liant de collage bitumineux selon l'invention telle que décrite ci-desssus, ledit procédé comprenant les étapes suivantes :
(i) Chauffage du bitume à une température comprise entre 140°C et 200°C, de préférence comprise entre 150°C et 180°C,
(ii) Ajout de l'adjuvant polymère oléfinique à une température comprise entre 140°C et 200°C, de préférence comprise entre 150°C et 190°C, le mélange étant maintenu à cette température sous agitation, par exemple à 350 tr/min, pendant une durée comprise entre 20 minutes et 4 heures, de préférence comprise entre 1 heure et 3 heures.
(iii) Ajout de l'additif (I) à une température comprise entre 140°C et 200°C, le mélange étant maintenu à cette température, sous agitation, par exemple à 350 tr/min, de préférence comprise entre 150°C et 190°C, pendant une durée comprise entre 10 minutes et 2 heures, de préférence comprise entre 20 minutes et 1 heure, lesdites étapes (ii) et (iii) étant réalisées simultanément ou successivement.

L'ordre d'introduction des différents composants du mélange est indifférent et n'a pas d'influence sur les propriétés du liant de collage.

L'invention concerne en outre une utilisation d'une composition bitumineuse contenant un additif de formule générale (I) :

Ar1-R-Ar2 (I)

où Ar1 et Ar2 représentent indépendamment l'un de l'autre un noyau benzène ou un système de noyaux aromatiques condensés de 6 à 20 atomes de carbones, substitués par au moins un groupe hydroxyle, et R représente un radical divalent éventuellement substitué, dont la chaîne principale comprend de 6 à 20 atomes de carbone et au moins un groupe amide et/ou ester,
caractérisée en ce que la composition bitumineuse comprend en outre au moins un adjuvant polymère oléfinique fonctionnalisé par au moins des groupements fonctionnels glycidyle,
pour le collage de revêtements d'ouvrages de travaux publics, de génie civil ou de bâtiments.

### DESCRIPTION DETAILLEE DE L'INVENTION

L'invention concerne un liant de collage bitumineux comprenant :
- un bitume
- au moins un additif de formule générale (I) :

   Ar1-R-Ar2 (I)

   où Ar1 et Ar2 représentent indépendamment l'un de l'autre un noyau benzène ou un système de noyaux aromatiques condensés de 6 à 20 atomes de carbones, substitués par au moins un groupe hydroxyle, et R représente un radical divalent éventuellement substitué, dont la chaîne principale comprend de 6 à 20 atomes de carbone et au moins un groupe amide et/ou ester, et
- au moins un adjuvant polymère oléfinique fonctionnalisé par au moins des groupements fonctionnels glycidyle.

Les avantages présentés par le liant de collage selon l'invention sont les suivantes :
- De très bonnes propriétés de collage, en particulier, le liant de collage présente une contrainte maximale τₘₐₓ avant et après vieillissement de 3 mois à 70°C, supérieure ou égale à 1 MPa, ainsi qu'une TBA élevée supérieure ou égale à 80°C ;
- Abaissement de la température de collage due à une viscosité faible, permettant d'éviter l'émission de fumées sur chantier, une baisse de la consommation d'énergie et une réduction du temps d'application ;
- Avantage économique : l'utilisation combinée de l'additif et de l'adjuvant polymère oléfinique permet de diminuer significativement la quantité globale d'additif dans le liant de collage, et donc de réduire le coût de fabrication du liant de collage, tout en conservant les mêmes performances de collage.

### Le bitume

Parmi les bitumes utilisables selon l'invention, on peut citer tout d'abord les bitumes d'origine naturelle, ceux contenus dans des gisements de bitume naturel, d'asphalte naturel ou les sables bitumineux et les bitumes provenant du raffinage du pétrole brut. Les bitumes selon l'invention sont avantageusement choisis parmi les bitumes provenant du raffinage du pétrole brut. Le bitume peut être choisi parmi les bases bitume ou mélange de bases bitume provenant du raffinage du pétrole brut, en particulier des bases bitume contenant des asphaltènes. Les bases bitume peuvent être obtenues par des procédés conventionnels de fabrication des bitumes en raffinerie, en particulier par distillation directe et/ou distillation sous vide du pétrole. Ces bitumes peuvent être éventuellement viscoréduits et/ou désasphaltés. Les différents bitumes obtenus par les procédés de raffinage peuvent être combinés entre eux pour obtenir le meilleur compromis technique. Le bitume peut aussi être un bitume de recyclage. Les bitumes peuvent être des bitumes de grade dur ou de grade mou. Les bitumes selon l'invention ont une pénétrabilité, mesurée à 25°C selon la norme EN 1426, comprise entre 5 et 300 1/10 mm, de préférence entre 10 et 100 1/10 mm, plus préférentiellement entre 30 et 100 1/10 mm.

Dans un mode de réalisation spécifique, le bitume représente de 90 à 99% en poids par rapport au poids total du liant, et plus préférentiellement de 95% à 99% en poids.

### L'additif (I)

L'additif (I) utilisé dans la présente invention répond à la formule générale suivante :

Ar1-R-Ar2 (I)

De préférence, -R- est en position *para* par rapport à un groupe hydroxyle de Ar1 et/ou de Ar2. En outre, Ar1 et/ou Ar2 peuvent être substitués par un ou plusieurs groupes alkyles comprenant de 1 à 10 atomes de carbone, de préférence en une ou des positions *ortho* par rapport au(x) groupe(s) hydroxyle(s) de Ar1 et/ou Ar2.

Préférentiellement, Ar1 et Ar2 sont des groupes 3,5-dialkyl-4-hydroxyphényle et mieux encore des groupes 3,5-di-*tert*-butyl-4-hydroxyphényle.

De préférence, leur radical divalent -R- possède la formule générale suivante (II): 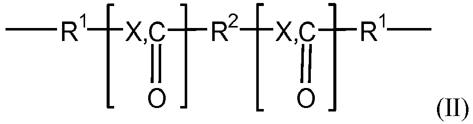 où
- R¹ représente un groupe alkylène en C₁-C₄,
- R² représente une simple liaison ou un groupe alkylène éventuellement substitué dont la chaîne principale comprend de 1 à 10 atomes de carbone, 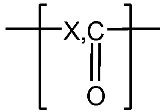 représente 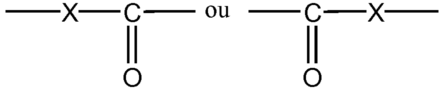
- et X représente un groupement divalent NH ou un atome d'oxygène.

Préférentiellement, le groupe R¹ est un groupe éthylène et indépendamment, le groupe R² est une simple liaison covalente ou un groupe n-hexylène. Lorsque R² est substitué, il peut s'agir d'un ou plusieurs substituant tel que les groupes alkaryles ou aralkyles, porteurs d'un groupe de type Ar1 et/ou Ar2.

De préférence, l'additif (I) est le 2',3-bis[[3-[3,5-di-tert-butyl-4-hydroxyphenyl]propionyl]]propionohydrazide.

Dans un mode de réalisation spécifique, l'additif (I) représente de 0,3% à 1,5% en poids, préférentiellement de 0,4% à 1% en poids, et plus préférentiellement encore de 0,8% à 1%, par rapport au poids total du liant

### L'adjuvant polymère oléfinique

Le liant de collage selon l'invention comprend au moins un adjuvant polymère oléfinique fonctionnalisé par au moins des groupements fonctionnels glycidyle.

Selon un mode de réalisation spécifique, l'adjuvant polymère oléfinique est choisi dans le groupe consistant en :
(a) les copolymères, statistiques ou séquencés, d'éthylène et d'un monomère choisi parmi l'acrylate de glycidyle et le méthacrylate de glycidyle, comprenant de 50% à 99,7% en masse d'éthylène;
(b) les terpolymères, statistiques ou séquencés, d'éthylène, d'un monomère A choisi parmi l'acétate de vinyle et les acrylates ou méthacrylates d'alkyle en C₁ à C₆ et d'un monomère B choisi parmi l'acrylate de glycidyle et le méthacrylate de glycidyle, comprenant de 0,5% à 40% en masse de motifs issus du monomère A et, de 0,5% à 15% en masse de motifs issus du monomère B, le reste étant formé de motifs issus de l'éthylène ; et
(c) les copolymères résultant du greffage d'un monomère B choisi parmi l'acrylate de glycidyle et le méthacrylate de glycidyle, sur un substrat consistant en un polymère choisi parmi les polyéthylènes, les polypropylènes, les copolymères statistiques ou séquencés d'éthylène et d'acétate de vinyle et les copolymère statistiques ou séquencés d'éthylène et d'acrylate ou méthacrylate d'alkyle en C₁ à C₆, comprenant de 40% à 99,7% en masse d'éthylène, lesdits copolymères greffés comprenant de 0,5% à 15% en masse de motifs greffés issus du monomère B.

Selon un mode de réalisation préférentiel, l'adjuvant polymère oléfinique est choisi parmi les terpolymères statistiques ou séquencés d'éthylène, d'un monomère A choisi parmi l'acétate de vinyle et les acrylates ou méthacrylates d'alkyle en C₁ à C₆ et d'un monomère B choisi parmi l'acrylate de glycidyle et le méthacrylate de glycidyle, comprenant de 0,5% à 40% en masse de motifs issus du monomère A, de préférence de 5% à 35% et, de 0,5% à 15% en masse de motifs issus du monomère B, de préférence de 2,5% à 15%, le reste étant formé de motifs issus de l'éthylène.

Selon un mode de réalisation préférentiel, l'adjuvant polymère oléfinique est choisi parmi les terpolymères statistiques d'éthylène, d'un monomère A choisi parmi les acrylates ou méthacrylates d'alkyle en C₁ à C₆ et d'un monomère B choisi parmi l'acrylate de glycidyle et le méthacrylate de glycidyle, comprenant de 0,5% à 40% en masse de motifs issus du monomère A, de préférence de 5% à 35%et, de 0,5% à 15% en masse de motifs issus du monomère B, de préférence de 2,5% à 15%, le reste étant formé de motifs issus de l'éthylène.

Selon un mode de réalisation préférentiel, l'adjuvant polymère oléfinique représente de 0,5% à 5% en poids, préférentiellement de 0,8% à 2,2%, et plus préférentiellement de 1% à 2%, par rapport au poids total du liant.

Dans un mode plus particulièrement préféré, le liant de collage selon l'invention comprend (en pourcentages en poids par rapport au poids total du liant) :
- de 90% à 99 % de bitume, de préférence de 95% à 99%,
- de 0,3% à 1,5% d'additif (I), de préférence de 0,4% à 1%, encore plus préférentiellement de 0,8% à 1%,
- de 0,5% à 5% d'adjuvant polymère oléfinique, de préférence de 0,8% à 2,2%, encore plus préférentiellement de 1% à 2%.

Les quantités d'additif (I) et d'adjuvant polymère oléfinique sont ajustées en fonction de la nature du bitume utilisé. En particulier, la pénétrabilité visée est de préférence comprise entre 20 et 45 1/10mm et la température de ramollissement bille anneau (TBA) visée est de préférence supérieure ou égale à 80°C, de préférence comprise entre 90°C et 120°C, étant entendu que la pénétrabilité est mesurée à 25°C selon la norme EN 1426 et la TBA selon la norme EN 1427.

### Additifs éventuels

Le liant de collage bitumineux tel que décrit ci-dessus peut également contenir d'autres additifs connus ou d'autres élastomères pour bitume connus tels que les copolymères SB (copolymère à blocs du styrène et du butadiène), SBS (copolymère à blocs styrène-butadiène-styrène), SIS (styrène-isoprène-styrène), SBS* (copolymère à blocs styrène-butadiène-styrène en étoile), SBR (styrène-b-butadiène-rubber), EPDM (éthylène propylène diène modifié). Ces élastomères peuvent en outre être réticulés selon tout procédé connu, par exemple avec du soufre.

### Procédé de préparation d'un liant de collage

La présente invention concerne également le procédé de préparation de liants de collage bitumineux selon l'invention. Ce procédé comprend les étapes suivantes :
(i) Chauffage du bitume à une température comprise entre 140°C et 200°C, de préférence comprise entre 150°C et 180°C,
(ii) Ajout de l'adjuvant polymère oléfinique à une température comprise entre 140°C et 200°C, de préférence comprise entre 150°C et 190°C, le mélange étant maintenu à cette température sous agitation, par exemple à 350 tr/min, pendant une durée comprise entre 20 minutes et 4 heures, de préférence comprise entre 1 heure et 3 heures.
(iii) Ajout de l'additif (I) à une température comprise entre 140°C et 200°C, le mélange étant maintenu à cette température, sous agitation, par exemple à 350 tr/min, de préférence comprise entre 150°C et 190°C, pendant une durée comprise entre 10 minutes et 2 heures, de préférence comprise entre 20 minutes et 1 heure, lesdites étapes (ii) et (iii) étant réalisées simultanément ou successivement.

L'ordre d'introduction des différents composants du mélange est indifférent et n'a pas d'influence sur les propriétés du liant de collage.

### Utilisation d'une composition bitumineuse contenant un additif (I)

L'invention a également pour objet l'utilisation d'une composition bitumineuse contenant un additif de formule générale (I) :

Ar1-R-Ar2 (I)

où Ar1 et Ar2 représentent indépendamment l'un de l'autre un noyau benzène ou un système de noyaux aromatiques condensés de 6 à 20 atomes de carbones, substitués par au moins un groupe hydroxyle, et R représente un radical divalent éventuellement substitué, dont la chaîne principale comprend de 6 à 20 atomes de carbone et au moins un groupe amide et/ou ester,
pour le collage de revêtements d'ouvrages de travaux publics, de génie civil ou de bâtiments.

Avantageusement, l'utilisation selon l'invention concerne le collage de revêtements sur les sols et/ou murs d'ouvrages de travaux publics, de génie civil ou de bâtiments.

De préférence, l'utilisation selon l'invention concerne le collage de revêtements d'étanchéité d'ouvrages de travaux publics, de génie civil ou de bâtiments, par exemple le collage des revêtements ou membranes d'étanchéité et/ou d'isolation, des panneaux ignifugés, des panneaux isolants thermiques et/ou phoniques et des plaques isolantes de mousses de verre expansé.

Selon un mode de réalisation préféré, l'utilisation selon l'invention concerne le collage d'une membrane d'étanchéité, par exemple une membrane d'étanchéité bitumineuse, de préférence sur un support non bitumineux.

Par membrane d'étanchéité, on vise tout système d'étanchéité préfabriqué utilisé principalement pour étanchéifier les ouvrages de travaux publics, de génie civil ou de bâtiments, par exemple les toitures des bâtiments, les murs enterrés, les balcons, les loggias ou les bassins de rétention d'eau.

Une membrane est généralement constituée d'une armature, éventuellement enrobée de bitume, et peut être monocouche, ou multicouches dans le cas de plusieurs membranes superposées et collées.

La composition bitumineuse ainsi utilisé comme liant de collage comprend en combinaison avec l'additif (I), un adjuvant polymère oléfinique fonctionnalisé par au moins des groupements fonctionnels glycidyle.

De préférence, le liant de collage selon l'invention présente une température de ramollissement Température Bille-Anneau déterminée selon la norme EN1427 supérieure ou égale à 80°C, de préférence comprise entre 90°C et 120°C.

Selon un autre mode de réalisation préféré, le liant de collage selon l'invention présente une contrainte maximale τₘₐₓ comprise entre 1 et 3 MPa, la contrainte maximale du liant de collage étant évaluée selon le test de pelage décrit dans la partie expérimentale ci-dessous.

Un liant de collage présente avantageusement une TBA élevée ainsi qu'une bonne résistance au fluage afin de permettre une bonne adhérence du revêtement sur son support, en particulier pour les supports inclinés et les revêtements de toiture soumis à des températures élevées (supérieures ou égales à 50°C, voire à 70°C).

### Procédé de collage de revêtements sur un support non bitumineux

L'invention concerne un procédé de collage de revêtements d'ouvrages de travaux publics, de génie civile ou de batiments, par exemple, de membrane d'étanchéité, comprenant une étape d'utilisation d'une composition bitumineuse comprenant l'additif (I) tel que décrit ci-dessus. Le procédé de collage selon l'invention peut s'appliquer pour coller par exemple des membranes d'étanchéité et/ou d'isolation, des panneaux ignifugés, des panneaux isolants thermiques et/ou phoniques, et des plaques isolantes de mousse de verre expansé, sur tout type de support, par exemple un support non bitumineux, en particulier du béton, du bois, de l'acier, et un matériau isolant, selon tout procédé connu.

Selon un mode de réalisation particulier, un procédé de collage de membrane d'étanchéité comprend le chauffage du liant de collage selon l'invention, à une température de mise en œuvre selon tout procédé connu, puis l'application dudit liant de collage à une température d'application selon tout procédé connu.

Le procédé de collage est avantageusement un procédé de collage à chaud. Avantageusement, les températures de mise en œuvre et d'application sont inférieures à 190°C, de préférence inférieures à 170°C.

Par exemple, un procédé de collage d'une membrane d'étanchéité sur une toiture en béton d'un bâtiment comprend les étapes successives suivantes :
- Chauffage du liant de collage selon l'invention, à une température de mise en œuvre inférieure à 190°C, de préférence inférieure à 180°C, plus préférentiellement inférieure ou égale à 160°C, selon tout procédé connu.
- Application d'une couche dudit liant de collage, d'épaisseur comprise entre 0,1 et 3 mm, de préférence entre 0,5 et 1,5 mm, sur le béton de la toiture. La composition bitumineuse est appliquée à une température d'application inférieure à 190°C, de préférence inférieure à 180°C, plus préférentiellement inférieure ou égale à 160°C, selon tout procédé connu, par exemple à l'aide d'un arrosoir, d'un couteau plat ou d'un pinceau.
- Application d'une membrane d'étanchéité sur la couche de liant de collage.

D'autres buts, caractéristiques et avantages de l'invention apparaîtront des exemples suivants, qui sont donnés à titre purement illustratif et nullement limitatif.

### EXEMPLES

Les caractéristiques rhéologiques et mécaniques des liants de collage auxquels on fait référence dans ces exemples sont mesurées de la façon indiquée dans le tableau 1.

**Tableau 1**

| **Propriété** | **Abréviation** | **Unité** | **Norme de mesure** |
|---|---|---|---|
| Pénétrabilité à l'aiguille à 25°C | P₂₅ | 1/10mm | NF EN 1426 |
| Température de ramollissement bille et anneau | TBA | °C | NF EN 1427 |
| Viscosité Brookfield | - | MPa.s | NF EN 13302 |

### Test de pelage

Le principe de l'essai consiste à exercer une traction sur un échantillon constitué par deux bandes de membrane d'étanchéité identiques collées entre elles par le liant de collage à tester. Chaque bande a une longueur initiale de 15 cm. L'assemblage des deux bandes se fait par coulage à 160°C d'une couche de 1 à 2 mm d'épaisseur du liant de collage sur une face de l'une des bandes de membrane. Puis les deux bandes sont associées et maintenues ainsi jointes jusqu'à refroidissement du liant de collage pour former l'échantillon à tester. Seule une extrémité des deux bandes de l'échantillon n'est pas collée sur une longueur d'environ 4 cm. Après retour à température ambiante de l'échantillon, l'essai de pelage est réalisé à l'aide d'une machine de traction commercialisée par la société Zwick et équipée d'une enceinte thermique permettant de réaliser l'essai à 23°C. Chaque partie non collée de l'extrémité de l'échantillon est maintenue par un mors de la machine de traction. La distance initiale entre les deux mors est de 50 mm. L'angle de traction entre les deux membranes de l'échantillon, initialement à 90° va s'ouvrir progressivement au fur et à mesure de la traction qui s'effectue à une vitesse de 100 mm/min. Sous la contrainte, les membranes de l'échantillon s'allongent jusqu'à ce que le liant de collage cède et que les membranes se décollent ou jusqu'à ce qu'au moins une des membranes rompe.

La machine de traction mesure la contrainte maximale appliquée à l'échantillon (τₘₐₓ), la distance maximale d'écartement des deux mors avant décollement des deux membranes en pourcentage par rapport à la distance initiale entre les deux mors (Dₘₐₓ), et l'énergie fournie pour atteindre cette distance maximale d'écartement (Eₘₐₓ).

Le test de pelage est réalisé sur le liant de collage selon l'invention, soit directement après sa préparation (t₀), soit après 3 mois passés dans une étuve à 70°C (étape de vieillissement).

### Composants utilisés

Les composants mis en œuvre dans les exemples sont :
- Bitume de grade 70/100 dont les caractéristiques répondent à la norme NF EN 12591
- Adjuvant polymère : terpolymère éthylène/acrylate de butyle/méthacrylate de glycidyle dans des proportions massiques, respectivement de 70/21/9 et possédant un indice de fusion MFR (acronyme anglais pour « Melt Flow Rate ») (190°C/2,16 kg) de 8g/10min, calculé selon la norme ASTM D1238- ISO1133.
- Additif :2',3-bis[(3-[3,5-di-tert-butyl-4-hydroxyphenyl]propionyl)] propionohydrazide
- Composition bitumineuse comprenant un polymère polystyrène-b-poly(éthylène-butylène)-b-polystyrène (SEBS) spécialement conçu pour le collage à chaud d'isolants thermiques ou de membranes d'étanchéité et commercialisée par la société SOPREMA sous le nom « EAC NEO ».
- Styrène-Butadiène-Styrène : SBS 1184 commercialisé par Kraton

### Préparation d'un liant de collage selon l'invention

- Chauffage du bitume à 160°C,
- Ajout de l'adjuvant polymère oléfinique à 160°c, agité à 350 tr/min pendant 2 heures,
- Ajout de l'additif (I) à 160°C, agité à 350 tr/min pendant 30 minutes.

### Etude des propriétés des liants de collage selon l'invention

Le tableau 2 suivant présente les caractéristiques physico-mécaniques du liant de collage selon l'invention (échantillons 1 à 4) en comparaison avec les liants témoins (échantillons 5 à 7).

| **N° de l'échantillon** | | **1** | **2** | **3** | **4** | **5** | **6*** « EAC NEO » SEBS | 7 |
|---|---|---|---|---|---|---|---|---|
| Composition de l'échantillon (en % en poids par rapport au poids total du liant) | Bitume 70/100 (%) | 99,3 | 99,1 | 97,5 | 97,7 | 98,2 | | 97,7 |
| | Adjuvant polymère (%) | | | 1,8 | 1,8 | 1,8 | | |
| | SBS 1184 V1081 (%) | | | | | | | 1,8 |
| | Additif (I) (%) | 0,7 | 0,9 | 0,7 | 0,5 | | | 0,5 |
| Caractéristiques du liant de collage | Pénétration (1/10 mm) à 25°C | 48 | 41 | 47,5 | 43 | 74 | 42 | 51 |
| | TBA (°C) | 54,5 | 103 | 100 | 93,5 | 51,5 | 76,5 | 52,8 |
| | Viscosité Brookfield à 150°C (mPa.s) | | | 268 | 310 | | 776 | |
| Test de pelage à T0 | τₘₐₓ (MPa) | 1,4 | 1,2 | 1,1 | 1,8 | 1,35 | 0,6 | 1,3 |
| | Dₘₐₓ (%) | 300 | 350 | 300 | 300 | 350 | 350 | 350 |
| | Eₘₐₓ (J) | 6,5 | 6,7 | 6,2 | 6,8 | 7,6 | 3,5 | 7,2 |
| Test de pelage après 3 mois à 70°C | τₘₐₓ (MPa) | 1,9 | 1,6 | 2,2 | 2,2 | 0,9 | - | 2,3 |
| | Dₘₐₓ (%) | 150 | 300 | 300 | 350 | 300 | - | 350 |
| | Eₘₐₓ (J) | 9,2 | 8,8 | 8,2 | 8,2 | 5,2 | - | 16,4 |

### * La mise en œuvre α nécessité une température de 190°C au lieu de 160°C

### Tableau 2 : Etude comparative

On constate que :
- L'échantillon 1 présente de bonnes propriétés de collage, avec un τₘₐₓ de 1,4 Mpa à T0. Néanmoins, l'échantillon 1 devient cassant après 3 moins à 70°C (Dmax de 150%).
- La comparaison des échantillons 1 et 2 montre qu'une teneur en additif égale à 0,7% en poids, ne permet pas d'obtenir une valeur de TBA supérieure à 80°C, alors qu'une teneur égale à 0,9% en poids (dite « valeur-seuil »), permet d'atteindre une valeur de TBA élevée et égale à 103°C. A 0,9% en poids, le liant de collage bitumineux est également peu cassant et a une valeur améliorée de distance maximale d'écartement Dₘₐₓ, que ce soit avant ou après vieillissement.
- Les échantillons 3 et 4 montrent que l'ajout d'adjuvant polymère permet de diminuer la quantité d'additif ajouté au bitume (teneur inférieure à la « valeur de 0,9%), tout en conservant les performances du liant de collage en termes de TBA, de pénétration, de contrainte τₘₐₓ et de distance Dₘₐₓ. Cette diminution de la quantité d'additif à incorporer dans le liant de collage représente un avantage économique non négligeable du fait du coût élevé de l'additif,
- L'utilisation d'adjuvant polymère oléfinique seul (échantillon 5) permet d'améliorer significativement la valeur de la pénétration, mais les valeurs de TBA et de τₘₐₓ ne sont pas satisfaisantes. La comparaison de cet échantillon 5 avec les précédents montre ainsi l'importance de la combinaison de l'additif avec l'adjuvant polymère sur les performances améliorées du liant de collage selon l'invention,
- Les échantillons 6 et 7 témoins portant sur des liants de collage « témoins » à base d'EAC NEO et de SBS, n'atteignent pas des valeurs de TBA aussi élevées que celles obtenues grâce au liant de collage selon l'invention.

## Revendications

1. Liant de collage bitumineux comprenant :
- un bitume
- au moins un additif de formule générale (I) :
Ar1-R-Ar2 (I)
où Ar1 et Ar2 représentent indépendamment l'un de l'autre un noyau benzène ou un système de noyaux aromatiques condensés de 6 à 20 atomes de carbones, substitués par au moins un groupe hydroxyle, et R représente un radical divalent éventuellement substitué, dont la chaîne principale comprend de 6 à 20 atomes de carbone et au moins un groupe amide et/ou ester, et
- au moins un adjuvant polymère oléfinique fonctionnalisé par au moins des groupements fonctionnels glycidyle.

2. Liant de collage bitumineux selon la revendication 1, **caractérisé en ce que** -R- est en position *para* par rapport à un groupe hydroxyle de Ar1 et/ou de Ar2.

3. Liant de collage bitumineux selon l'une quelconque des revendications précédentes **caractérisé en ce que** Ar1 et/ou Ar2 sont substitués par au moins un groupe alkyle comprenant de 1 à 10 atomes de carbone, de préférence en une ou des positions *ortho* par rapport au(x) groupe(s) hydroxyle(s) de Ar1 et/ou Ar2.

4. Liant de collage bitumineux selon l'une quelconque des revendications précédentes **caractérisé en ce que** Ar1 et Ar2 sont des groupes 3,5-dialkyl-4-hydroxyphényle, avantageusement des groupes 3,5-di-*tert*-butyl-4-hydroxyphényle.

5. Liant de collage bitumineux selon l'une quelconque des revendications précédentes **caractérisé en ce que** l'additif est le 2',3-bis[[3-[3,5-di-tert-butyl-4-hydroxyphenyl]propionyl]]propionohydrazide.

6. Liant de collage bitumineux selon l'une quelconque des revendications précédentes **caractérisé en ce que** l'additif représente de 0,3 à 1,5% en poids par rapport au poids total du liant.

7. Liant de collage bitumineux selon l'une quelconque des revendications précédentes **caractérisé en ce que** l'adjuvant polymère oléfinique est choisi dans le groupe consistant en
(a) les copolymères statistiques ou séquencés d'éthylène et d'un monomère choisi parmi l'acrylate de glycidyle et le méthacrylate de glycidyle, comprenant de 50% à 99,7% en masse d'éthylène,
(b) les terpolymères statistiques ou séquencés, d'éthylène, d'un monomère A choisi parmi l'acétate de vinyle et les acrylates ou méthacrylates d'alkyle en C₁ à C₆, et d'un monomère B choisi parmi l'acrylate de glycidyle et le méthacrylate de glycidyle, comprenant de 0,5% à 40% en masse de motifs issus du monomère A et, de 0,5% à 15% en masse de motifs issus du monomère B, le reste étant formé de motifs issus de l'éthylène ; et
(c) les copolymères résultant du greffage d'un monomère B choisi parmi l'acrylate de glycidyle et le méthacrylate de glycidyle, sur un substrat consistant en un polymère choisi parmi les polyéthylènes, notamment les polyéthylènes basse densité, les polypropylènes, les copolymères statistiques ou séquencés d'éthylène et d'acétate de vinyle et les copolymère statistiques ou séquencés d'éthylène et d'acrylate ou méthacrylate d'alkyle en C₁ à C₆, comprenant de 40% à 99,7% en masse d'éthylène, lesdits copolymères greffés comprenant de 0,5% à 15% en masse de motifs greffés issus du monomère B.

8. Liant de collage bitumineux selon l'une quelconque des revendications précédentes **caractérisé en ce que** l'adjuvant polymère oléfinique est choisi parmi les terpolymères statistiques ou séquencés d'éthylène, d'un monomère A choisi parmi les acrylates ou méthacrylates d'alkyle en C1 à C6 et d'un monomère B choisi parmi l'acrylate de glycidyle et le méthacrylate de glycidyle, comprenant de 0,5% à 40% en masse de motifs issus du monomère A et, de 0,5% à 15% en masse de motifs issus du monomère B, le reste étant formé de motifs issus de l'éthylène.

9. Liant de collage bitumineux selon l'une quelconque des revendications précédentes **caractérisé en ce que** l'adjuvant polymère oléfinique représente de 0,5 à 5 % en poids par rapport au poids total du liant.

10. Liant de collage bitumineux selon l'une quelconque des revendications précédentes **caractérisé en ce qu'**il présente une température de ramollissement Température Bille-Anneau déterminée selon la norme EN1427 supérieure ou égale à 80°C.

11. Liant de collage bitumineux selon l'une quelconque des revendications précédentes **caractérisé en ce qu'**il présente une contrainte maximale τₘₐₓ, avant et après vieillissement de 3 mois à 70°C, comprise entre 1 et 3 MPa, telle que déterminée par un essai de pelage.

12. Procédé de préparation d'un liant de collage bitumineux selon l'une des revendications précédentes, comprenant les étapes suivantes :
(i) Chauffage du bitume à une température comprise entre 140°C et 200°C, de préférence comprise entre 150°C et 180°C,
(ii) Ajout de l'adjuvant polymère oléfinique à une température comprise entre 140°C et 200°C, de préférence comprise entre 150°C et 190°C, le mélange étant maintenu à cette température sous agitation, par exemple à 350 tr/min, pendant une durée comprise entre 20 minutes et 4 heures, de préférence comprise entre 1 heure et 3 heures.
(iii) Ajout de l'additif (I) à une température comprise entre 140°C et 200°C, le mélange étant maintenu à cette température, sous agitation, par exemple à 350 tr/min, de préférence comprise entre 150°C et 190°C, pendant une durée comprise entre 10 minutes et 2 heures, de préférence comprise entre 20 minutes et 1 heure, lesdites étapes (ii) et (iii) étant réalisées simultanément ou successivement.

13. Utilisation d'une composition bitumineuse contenant un additif de formule générale (I) :
Ar1-R-Ar2 (I)
où Ar1 et Ar2 représentent indépendamment l'un de l'autre un noyau benzène ou un système de noyaux aromatiques condensés de 6 à 20 atomes de carbones, substitués par au moins un groupe hydroxyle, et R représente un radical divalent éventuellement substitué, dont la chaîne principale comprend de 6 à 20 atomes de carbone et au moins un groupe amide et/ou ester,
et **caractérisée en ce que** la composition bitumineuse comprend en outre au moins un adjuvant polymère oléfinique fonctionnalisé par au moins des groupements fonctionnels glycidyle, pour le collage de revêtements d'ouvrages de travaux publics, de génie civil ou de bâtiments.

14. Utilisation selon la revendication 13, pour le collage de revêtements sur les sols et/ou murs d'ouvrages de travaux publics, de génie civil ou de bâtiments

15. Utilisation selon l'une des revendications 13 et 14, pour le collage des revêtements ou membranes d'étanchéité et/ou d'isolation, des panneaux ignifugés, des panneaux isolants thermiques et/ou phoniques et des plaques isolantes de mousses de verre expansé.

16. Utilisation selon la revendication 15, pour le collage de revêtements d'étanchéité d'ouvrages de travaux publics, de génie civil ou de bâtiments.

17. Utilisation selon la revendication 16 pour le collage d'une membrane d'étanchéité, par exemple sur un support non bitumineux.

## Patentansprüche

1. Bituminöses Klebebindemittel, umfassend:
- ein Bitumen
- mindestens einen Zusatzstoff der allgemeinen Formel (I):
Ar1-R-Ar2 (I)
wobei Ar1 und Ar2 unabhängig voneinander für einen Benzolring oder ein kondensiertes System von Aromatenringen mit 6 bis 20 Kohlenstoffatomen stehen, die mit mindestens einer Hydroxylgruppe substituiert sind, und R für einen möglicherweise substituierten zweibindigen Rest steht, dessen Hauptkette 6 bis 20 Kohlenstoffatome und mindestens eine Amid- und/oder Estergruppe umfasst, und
- mindestens einen olefinischen polymerartigen Hilfsstoff, der zumindest mit funktionellen Glycidylgruppen funktionalisiert ist.

2. Bituminöses Klebebindemittel nach Anspruch 1, **dadurch gekennzeichnet, dass** - R- sich gegenüber einer Hydroxylgruppe von Ar1 und/oder Ar2 in einer para-Stellung befindet.

3. Bituminöses Klebebindemittel nach einem beliebigen der vorhergehenden Ansprüche, **dadurch gekennzeichnet, dass** Ar1 und/oder Ar2 mit mindestens einer Alkylgruppe substituiert sind, die 1 bis 10 Kohlenstoffatome umfasst, vorzugsweise in einer oder jeweils in einer *ortho-*Stellungen gegenüber der/den Hydroxylgruppe(n) von Ar1 und/oder Ar2.

4. Bituminöses Klebebindemittel nach einem beliebigen der vorhergehenden Ansprüche, **dadurch gekennzeichnet, dass** es sich bei Ar1 und Ar2 um 3,5-Dialkyl-4-hydroxyphenylgruppen, vorteilhafterweise um 3,5-di-*tert*-Butyl-4-hydroxyphenylgruppen handelt.

5. Bituminöses Klebebindemittel nach einem beliebigen der vorhergehenden Ansprüche, **dadurch gekennzeichnet, dass** es sich bei dem Zusatzstoff um 2',3-bis[[3-[3,5-di-tert-Butyl-4-hydroxyphenyl]propionyl]]propionohydrazid handelt.

6. Bituminöses Klebebindemittel nach einem beliebigen der vorhergehenden Ansprüche, **dadurch gekennzeichnet, dass** der Zusatzstoff 0,3 bis 1,5 Gewichts-% ausmacht, bezogen auf das Gesamtgewicht des Bindemittels.

7. Bituminöses Klebebindemittel nach einem beliebigen der vorhergehenden Ansprüche, **dadurch gekennzeichnet, dass** der olefinische polymerartige Hilfsstoff aus der Gruppe ausgewählt ist, die aus den folgenden besteht
(a) den statistischen oder abschnittsweise aufgebauten Copolymeren von Ethylen und einem Monomer, das aus Glycidylacrylat und Glycidylmethacrylat ausgewählt ist, wobei sie 50 % bis 99,7 % nach Masse an Ethylen umfassen,
(b) den statistischen oder abschnittsweise aufgebauten Terpolymeren von Ethylen, einem Monomer A, das aus Vinylacetat und C₁-C₆-Alkylacrylaten oder - methacrylaten ausgewählt ist, und einem Monomer B, das aus Glycidylacrylat und Glycidylmethacrylat ausgewählt ist, wobei sie 0,5 % bis 40 % nach Masse an Bausteinen, welche sich vom Monomer A ableiten, und 0,5 % bis 15 % nach Masse an Bausteinen umfassen, welche sich von dem Monomer B ableiten, wobei Bausteine, welche sich von Ethylen ableiten, den Rest bilden; und
(c) den Copolymeren, wie sie erhalten werden, indem ein Monomer B, welches aus Glycidylacrylat und Glycidylmethacrylat ausgewählt ist, auf ein Substrat gepfropft wird, das aus einem Polymer besteht, welches aus den Polyethylenen, insbesondere den Polyethylen niedriger Dichte, den Polypropylenen, den statistischen oder abschnittsweise aufgebauten Copolymeren von Ethylen und Vinylacetat und den statistischen oder abschnittsweise aufgebauten Copolymeren von Ethylen und C₁-C₆-Alkylacrylat oder -methacrylat ausgewählt ist, welche 40 % bis 99,7 % nach Masse an Ethylen umfassen, wobei die gepfropften Copolymere 0,5 bis 15 % nach Masse an gepfropften Bausteinen umfassen, welche sich von dem Baustein B ableiten.

8. Bituminöses Klebebindemittel nach einem beliebigen der vorhergehenden Ansprüche, **dadurch gekennzeichnet, dass** der olefinische polymerartige Hilfsstoff aus den statistischen oder abschnittsweise aufgebauten Terpolymeren von Ethylen, einem Monomer A, welches aus C₁-C₆-Alkylacrylaten oder -methacrylaten ausgewählt ist, und einem Monomer B ausgewählt ist, welches aus Glycidylacrylat und Glycidylmethacrylat ausgewählt ist, wobei sie 0,5 % bis 40 % nach Masse an Bausteinen, welche sich vom Monomer A ableiten, und 0,5 % bis 15 % nach Masse an Bausteinen umfassen, welche sich von dem Monomer B ableiten, wobei Bausteine, welche sich von Ethylen ableiten, den Rest bilden.

9. Bituminöses Klebebindemittel nach einem beliebigen der vorhergehenden Ansprüche, **dadurch gekennzeichnet, dass** der olefinische polymerartige Hilfsstoff 0,5 bis 5 Gewichts-% ausmacht, bezogen auf das Gesamtgewicht des Bindemittels.

10. Bituminöses Klebebindemittel nach einem beliebigen der vorhergehenden Ansprüche, **dadurch gekennzeichnet, dass** es eine Erweichungstemperatur - Erweichungspunkt Ring und Kugel - aufweist, die bei einer Bestimmung gemäß der Norm EN1427 mindestens 80 °C beträgt.

11. Bituminöses Klebebindemittel nach einem beliebigen der vorhergehenden Ansprüche, **dadurch gekennzeichnet, dass** es einen Belastungshöchstwert τₘₐₓ, vor und nach einer 3-monatigen Alterung bei 70 °C, im Bereich von 1 bis 3 MPa aufweist, wenn die Bestimmung mittels eines Schälversuchs erfolgt.

12. Verfahren zur Herstellung eines bituminösen Klebebindemittels nach einem der vorhergehenden Ansprüche, welches die folgenden Schritte umfasst:
(i) Erhitzen des Bitumens bei einer Temperatur im Bereich von 140 °C bis 200 °C, vorzugsweise im Bereich von 150 °C bis 180 °C,
(ii) Hinzufügen des olefinischen polymerartigen Hilfsstoffs bei einer Temperatur im Bereich von 140 °C bis 200 °C, vorzugsweise im Bereich von 150 °C bis 190 °C, wobei die Mischung bei dieser Temperatur weitergerührt wird, beispielsweise mit 350 U/min., über eine Zeitdauer im Bereich von 20 Minuten bis 4 Stunden, vorzugsweise im Bereich von 1 Stunde bis 3 Stunden.
(iii) Hinzufügen des Zusatzstoffs (I) bei einer Temperatur im Bereich von 140 °C bis 200 °C, wobei die Mischung bei dieser Temperatur beispielsweise mit 350 U/min. weitergerührt wird, wobei diese vorzugsweise im Bereich von 150 °C bis 190 °C liegt, über eine Zeitdauer im Bereich von 10 Minuten bis 2 Stunden, vorzugsweise im Bereich von 20 Minuten bis 1 Stunde, wobei die Schritte (ii) und (iii) gleichzeitig oder nacheinander durchgeführt werden.

13. Verwendung einer Bitumenzusammensetzung, die einen Zusatzstoff der allgemeinen Formel (I) enthält:
Ar1-R-Ar2 (I)
wobei Ar1 und Ar2 unabhängig voneinander für einen Benzolring oder ein kondensiertes System von Aromatenringen mit 6 bis 20 Kohlenstoffatomen stehen, die mit mindestens einer Hydroxylgruppe substituiert sind, und R für einen möglicherweise substituierten zweibindigen Rest steht, dessen Hauptkette 6 bis 20 Kohlenstoffatome und mindestens eine Amid- und/oder Estergruppe umfasst,
und sie **dadurch gekennzeichnet ist, dass** die Bitumenzusammensetzung darüber hinaus mindestens einen olefinischen polymerartigen Hilfsstoff umfasst, der zumindest mit funktionellen Glycidylgruppen funktionalisiert ist, um Beschichtungen von Bauwerken der öffentlichen Infrastruktur, des Bauingenieurwesens oder von Gebäuden festzukleben.

14. Verwendung nach Anspruch 13, zum Kleben von Beschichtungen auf die Böden und/oder Wände von Bauwerken der öffentlichen Infrastruktur, des Bauingenieurwesens oder von Gebäuden.

15. Verwendung nach einem der Ansprüche 13 und 14, zum Festkleben von Beschichtungen oder Abdichtungs- und/oder Isoliermembranen, flammhemmenden Paneelen, wärme- und/-oder schallisolierenden Paneelen und von Dämmplatten aus Blähglasschaumstoffen.

16. Verwendung nach Anspruch 15, zum Festkleben von abdichtenden Beschichtungen von Bauwerken der öffentlichen Infrastruktur, des Bauingenieurwesens oder von Gebäuden.

17. Verwendung nach Anspruch 16, um eine Abdichtungsmembran beispielsweise auf einen nicht-bituminösen Träger zu kleben.

## Claims

1. Bituminous bonding binder comprising:
- a bitumen
- at least one additive of general formula (I):
Ar1-R-Ar2 (I)
wherein Ar1 and Ar2 represent, independent of one another, a benzene ring or a system of fused aromatic rings containing from 6 to 20 carbon atoms, substituted with at least one hydroxyl group, and R represents an optionally substituted, divalent radical of which the main chain comprises from 6 to 20 carbon atoms and at least one amide and/or ester group, and
- at least one olefinic polymer adjuvant functionalized with at least glycidyl functional groups.

2. Bituminous bonding binder according to Claim 1, **characterized in that** -R- is in the *para* position with respect to a hydroxyl group of Ar1 and/or of Ar2.

3. Bituminous bonding binder according to either one of the preceding claims, **characterized in that** Ar1 and/or Ar2 are substituted with at least one alkyl group comprising from 1 to 10 carbon atoms, preferably in one or more *ortho* positions with respect to the hydroxyl group(s) of Ar1 and/or Ar2.

4. Bituminous bonding binder according to any one of the preceding claims, **characterized in that** Ar1 and Ar2 are 3,5-dialkyl-4-hydroxyphenyl groups, advantageously 3,5-di-*tert*-butyl-4-hydroxyphenyl groups.

5. Bituminous bonding binder according to any one of the preceding claims, **characterized in that** the additive is 2', 3-bis[[3-[3,5-di-tert-butyl-4-hydroxyphenyl]propionyl]]propionohydrazide.

6. Bituminous bonding binder according to any one of the preceding claims, **characterized in that** the additive represents from 0.3 to 1.5% by weight relative to the total weight of the binder.

7. Bituminous bonding binder according to any one of the preceding claims, **characterized in that** the olefinic polymer adjuvant is chosen from the group consisting of
(a) random or block copolymers of ethylene and of a monomer chosen from glycidyl acrylate and glycidyl methacrylate, comprising from 50% to 99.7% by weight of ethylene,
(b) random or block terpolymers of ethylene, of a monomer A chosen from vinyl acetate and C₁ to C₆ alkyl acrylates or methacrylates, and of a monomer B chosen from glycidyl acrylate and glycidyl methacrylate, comprising from 0.5% to 40% by weight of units derived from the monomer A, and from 0.5% to 15% by weight of units derived from the monomer B, the remainder being formed of units derived from ethylene; and
(c) copolymers resulting from the grafting of a monomer B chosen from glycidyl acrylate and glycidyl methacrylate, onto a substrate consisting of a polymer chosen from polyethylenes, notably low-density polyethylenes, polypropylenes, random or block copolymers of ethylene and of vinyl acetate and random or block copolymers of ethylene and of C₁ to C₆ alkyl acrylate or methacrylate, comprising from 40% to 99.7% by weight of ethylene, said grafted copolymers comprising from 0.5% to 15% by weight of grafted units derived from the monomer B.

8. Bituminous bonding binder according to any one of the preceding claims, **characterized in that** the olefinic polymer adjuvant is chosen from random or block terpolymers of ethylene, of a monomer A chosen from C₁ to C₆ alkyl acrylates or methacrylates and of a monomer B chosen from glycidyl acrylate and glycidyl methacrylate, comprising from 0.5% to 40% by weight of units derived from the monomer A, and from 0.5% to 15% by weight of units derived from the monomer B, the remainder being formed of units derived from ethylene.

9. Bituminous bonding binder according to any one of the preceding claims, **characterized in that** the olefinic polymer adjuvant represents from 0.5 to 5% by weight relative to the total weight of the binder.

10. Bituminous bonding binder according to any one of the preceding claims, **characterized in that** it has a ring-and-ball softening point determined according to Standard EN1427 of greater than or equal to 80°C.

11. Bituminous bonding binder according to any one of the preceding claims, **characterized in that** it has a maximum stress τₘₐₓ, before and after ageing for 3 months at 70°C, of between 1 and 3 MPa, as determined by a peel test.

12. Method for producing a bituminous bonding binder according to one of the preceding claims, comprising the following steps:
(i) heating the bitumen to a temperature of between 140°C and 200°C, preferably of between 150°C and 180°C,
(ii) adding the olefinic polymer adjuvant at a temperature of between 140°C and 200°C, preferably of between 150°C and 190°C, the mixture being maintained at this temperature with stirring, for example at 350 rpm, for a period of between 20 minutes and 4 hours, preferably of between 1 hour and 3 hours,
(iii) adding the additive (I) at a temperature of between 140°C and 200°C, the mixture being maintained at this temperature with stirring, for example at 350 rpm, preferably of between 150°C and 190°C, for a period of between 10 minutes and 2 hours, preferably of between 20 minutes and 1 hour, said steps (ii) and (iii) being carried out simultaneously or successively.

13. Use of a bituminous composition containing an additive of general formula (I):
Ar1-R-Ar2 (I)
wherein Ar1 and Ar2 represent, independently of one another, a benzene ring or a system of fused aromatic rings containing from 6 to 20 carbon atoms, substituted with at least one hydroxyl group, and R represents an optionally substituted, divalent radical of which the main chain comprises from 6 to 20 carbon atoms and at least one amide and/or ester group,
and **characterized in that** the bituminous composition also comprises at least one olefinic polymer adjuvant functionalized with at least glycidyl functional groups, for the bonding of coatings for public works, civil engineering works or construction works.

14. Use according to Claim 13, for the bonding of floor and/or wall coatings for public works, civil engineering works or construction works.

15. Use according to either of Claims 13 and 14, for the bonding of sealing and/or insulating coatings or membranes, flame-retardant panels, heat-insulating and/or sound-insulating panels and expanded glass foam insulating plates.

16. Use according to Claim 15, for the bonding of sealing coatings for public works, civil engineering works or construction works.

17. Use according to Claim 16, for the bonding of a sealing membrane, for example on a non-bituminous support.
